# EUROPÄISCHE PATENTSCHRIFT

(11) **EP 2 067 242 B1**
(45) Veröffentlichungstag und Bekanntmachung des Hinweises auf die Patenterteilung: **13.10.2010**
(21) Anmeldenummer: 07802652.3
(22) Anmeldetag: 16.08.2007
(51) Int. Cl.: H02K 23/20, H02K 5/14, H02K 23/04

(54) **GLEICHSTROMMOTOR MIT DREHZAHLSTELLUNG**
DC MOTOR WITH ROTATION SPEED REGULATION
MOTEUR À COURANT CONTINU AVEC RÉGLAGE DE LA VITESSE

(30) Priorität: 15.09.2006 DE 102006043316
(43) Veröffentlichungstag der Anmeldung: 10.06.2009
(73) Patentinhaber: Robert Bosch GmbH, 70442 Stuttgart (DE)
(72) Erfinder: KASTINGER, Guenter, 76571 Gaggenau-Sulzbach (DE)
(86) Internationale Anmeldenummer: PCT/EP2007/058517
(87) Internationale Veröffentlichungsnummer: WO 2008/031686

(56) Entgegenhaltungen:
- EP-A- 0 076 206
- EP-A- 0 356 791
- EP-A- 0 724 325

## Beschreibung

### Stand der Technik

Die vorliegende Erfindung betrifft einen Gleichstrommotor mit Drehzahlstellung.

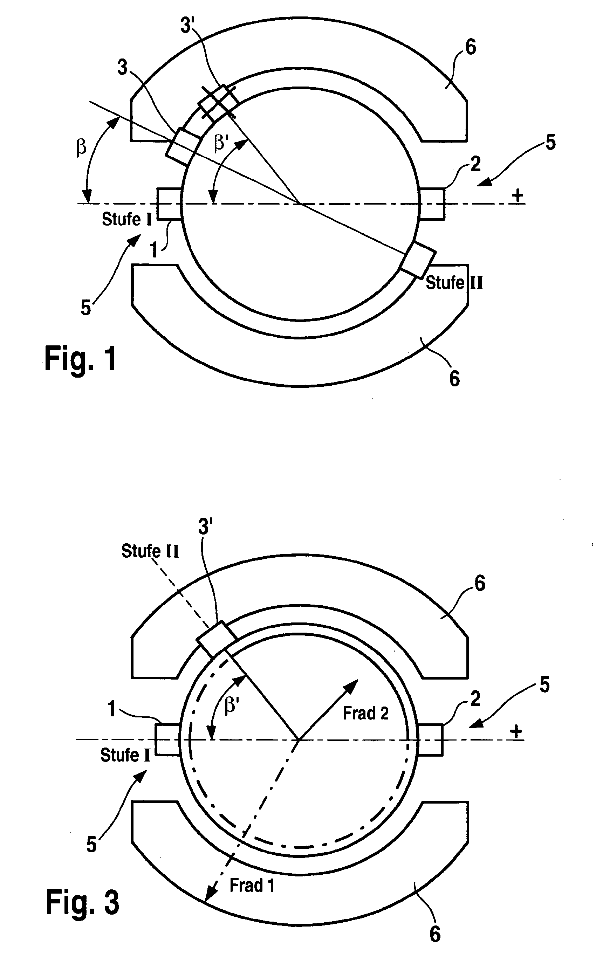

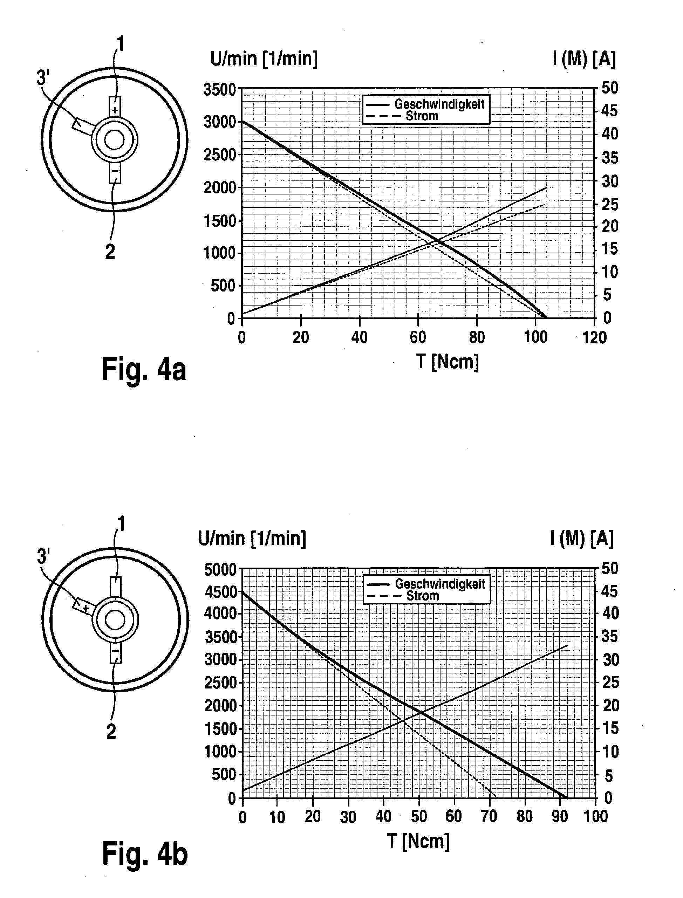

Der Einsatz einer dritten Bürste zur Geschwindigkeitsstellung ist z.B. bei Wischermotoren bekannt. Ein solcher Motor (hier beispielhaft zweipolig) ist schematisch in Figur 3 gezeigt, bei dem in einer ersten Stufe eine erste Bürste 1 und eine dieser gegenüberliegende, d.h. um 180°/p, mit p=Polpaanahl, (bei zweipoligen Motoren also p=1) versetzte zweite Bürste 2 und in einer zweiten Stufe eine dritte Bürste 3' zusammen mit der zweiten Bürste 2 zur Bestromung des Läufers verwendet werden. Die erste Bürste 1 und die zweite Bürste 2 sind jeweils in einem Spalt 5 zwischen zwei Magnetpolen 6 des Gleichstrommotors angeordnet. Die dritte Bürste 3' ist im Bereich eines Magnetpols 6 angeordnet. Hier befinden sich unter einem Pol Leiter, die ein bremsendes Drehmoment hervorrufen. Wird dieses Bremsmoment von dem Nutzmoment der Leiter unter einem anderen Pol abgezogen, so wirkt die dritte Bürste 3', was die Leiterzahl betrifft, quasi wie eine Verringerung der Leiterzahl bei konstantem Drahtquerschnitt. Es ergibt sich jedoch ein Ankerwiderstand, der größer ist, als es der Momentenwirkung von der Leiterzahl her entspricht, womit sich das Kurzschlussmoment (Haltemoment, Anzugsmoment) verringert. Dies kann auch der Figur 4 entnommen werden, wobei Figur 4a einen Betrieb des Motors in der Stufe 1, d.h. über die erste Bürste 1 und die zweite Bürste 2, zeigt und Figur 4b einen Betrieb in der Stufe 2, d.h. über die dritte Bürste 3' und die zweite Bürste 2, zeigt. In Figur 4a wird der Gleichstrommotor über die Bürstenposition 0° (mechanisch) der ersten Bürste 1 als Pluspol und 180°/p (mechanisch) der zweiten Bürste 2 als Minuspol betrieben und in der Figur 4b über die Bürstenpositionen 70°/p (mechanisch) der dritten Bürste 3' als Pluspol und 180°/p (mechanisch) der zweiten Bürste 2 als Minuspol.

In der Stufe 1 ergeben sich durch das Mitschleifen der dritten Bürste 3' und der damit verbundenen kurzgeschlossenen Windungen Unsymmetrien. In Stufe 2 ergeben sich zusätzliche Unsymmetrien durch einen ungleichmäßig verteilten Ankerstrombelag am Umfang, hier durch radiale Kräfte zweite Bürste 2 - dritte Bürste 3': Frad1, und dritte Bürste 3'-zweite Bürste 2: Frad2, die in Betrag und Richtung unterschiedlich sind, wie in Figur 3 gezeigt. Da hier Frad1 > Frad2, kommt es auch zu entsprechenden Geräuschanregungen.

Diese Unsymmetrien lassen sich durch Verwenden einer symmetrischen Wicklung reduzieren. Hierbei muss jedoch von vorhandenen Wicklungskonzepten, z.B. H-Wicklung, abgewichen werden.

Die EP-A-0 356 791 zeigt eine Scheibenwischeranlage mit einem Gleichstrommotor, der in wenigstens zwei unterschiedlichen Drehzahlstufen betreibbar ist. Dabei ist an einem Kollektor des Elektromotors eine Bürste angeordnet, die jeweils in Kombination mit weiteren Bürsten unterschiedlicher Winkelanordnung unterschiedliche Drehzahlstufen realisieren.

Die EP-A-0 724 325 zeigt zwei versetzte Bürstenpaare, die parallel geschaltet sind und eine redundante Anordnung zur Erhöhung der Ausfallsicherheit des Motors bildet.

Mit der EP-A-0 076 206 ist ein Elektromotor mit um 280 Grad versetzt angeordnete Bürsten als Bürstenpaar einer Drehzahlstufe bekannt geworden. Zusätzlich ist als weitere Drehzahlstufe für jede Drehrichtung eine Hilfsbürste vorgesehen, die aber immer mit einer der Bürsten des ersten Bürstenpaares betrieben wird.

### Vorteile der Erfindung

Der erfindungsgemäße Gleichstrommotor mit den Merkmalen des Patentanspruches 1 weist demgegenüber den Vorteil auf, dass die Unsymmetrien vermieden werden, was insbesondere durch eine Verringerung radialer Kräfte erfolgt, wodurch ebenfalls die mit den Unsymmetrien auftretenden Geräuschanregungen reduziert werden. Dies wird erfindungsgemäß dadurch erreicht, dass der Gleichstrommotor neben einer ersten Bürste, einer dazu um 180°/p, mit p=Polpaarzahl, versetzten zweiten Bürste, über die der Elektromotor in einer ersten Drehzahlstufe betrieben wird, und einer dritten Bürste, über die der Elektromotor in einer zweiten Drehzahlstufe betrieben wird, wobei die dritte Bürste in einem Winkel < 180°/p zur ersten Bürste versetzt angeordnet ist, noch mit einer vierten Bürste versehen ist, die um 180°/p versetzt zur dritten Bürste angeordnet ist, und über die der Elektromotor in der zweiten Drehzahlstufe zusammen mit der dritten Bürste betrieben wird. Durch dieses System mit 4 Bürsten zur Drehzahlverstellung kann die vorhandene Wicklung beibehalten werden und eine Symmetrie wird unabhängig von der Bürstenstellung gewährleistet. Der erfindungsgemäße Gleichstrommotor mit Drehzahlverstellung ist somit geräuschoptimiert.

Die Unteransprüche zeigen bevorzugte Weiterbildungen der Erfindung.

Bei dem erfindungsgemäßen Gleichstrommotor ist vorzugsweise die dritte Bürste gegenüber einer Anordnung mit drei Bürsten, bei der die dritte Bürste in einem Winkel < β' versetzt zur ersten Bürste angeordnet ist und bei der der Elektromotor in der zweiten Drehzahlstufe über die dritte Bürste und die zweite Bürste betrieben wird, gegenüber der ersten Bürste um einen Winkel β < β' versetzt angeordnet. Durch diese erfindungsgemäß vorzuziehende reduzierte Verdrehung der dritten Bürste aus der neutralen Zone (und mit dieser auch die spiegelbildlich angeordnete vierte Bürste) wird bei einem Betrieb über die dritte Bürste und die vierte Bürste eine ähnliche Betriebskennlinie erreicht, wie bei der Anordnung 3 mit Bürsten nach dem Stand der Technik, bei der der Gleichstrommotor in der Stufe 2 über die dritte Bürste und die zweite Bürste betrieben wird.

Der erfindunpsgemäße Gleichstrommotor wird vorzugsweise auch bei Polpaarzahlen größer gleich 1, also auch bei vier und mehr Magnetpolen in der ersten Drehzahlstufe über die erste Bürste und die zweite Bürste und in der zweiten Drehzahlstufe über die dritte Bürste und die vierte Bürste betrieben. Dies erfolgt über eine entsprechende Gestaltung der Wicklungsanordnung.

### Zeichnung

Nachfolgend wird ein bevorzugtes Ausführungsbeispiel der Erfindung unter Bezugnahme auf die begleitende Zeichnung beschrieben. In der Zeichnung ist:
- Figur 1: eine schematische Ansicht eines zweipoligen Gleichstrommotors nach einem Ausführungsbeispiel der Erfindung,
- Figur 2: eine berechnete Betriebskennlinie des erfindungsgemäßen Gleichstrommotors,
- Figur 3: eine schematische Ansicht eines Gleichstrommotors mit Drehzahlverstellung nach dem Stand der Technik, und
- Figur 4: eine berechnete Betriebskennlinie des Gleichstrommotors mit Drehzahlverstellung nach dem Stand der Technik.

### Ausführungsformen der Erfindung

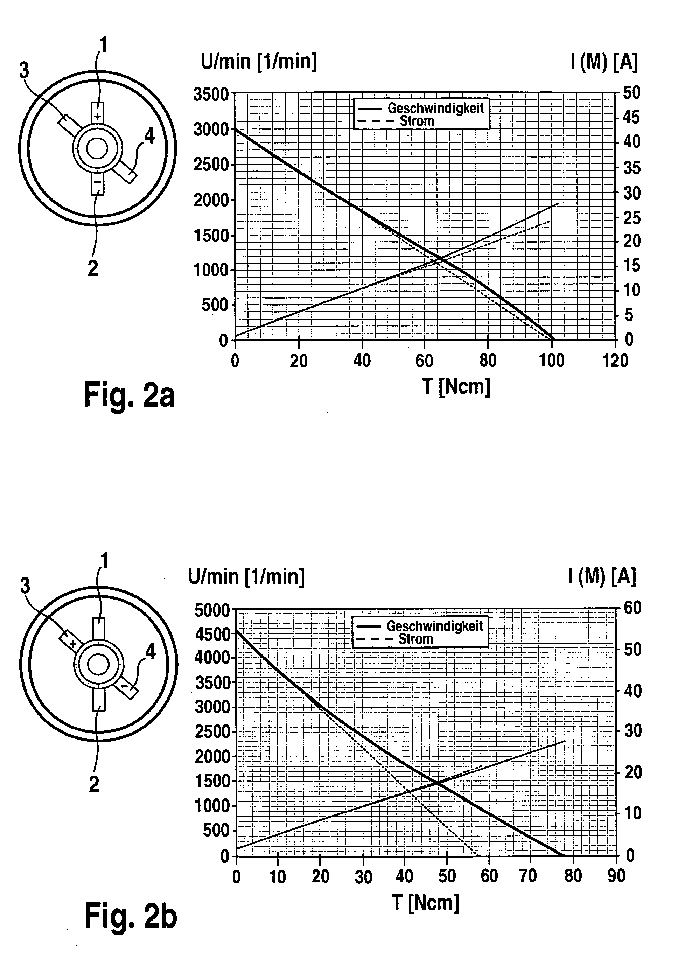

Nachfolgend wird unter Bezugnahme auf die Figuren 1 und 2 ein bevorzugtes Ausführungsbeispiel eines erfindungsgemäßen zweipoligen Gleichstrommotors (p=1) beschrieben.

In Figur 1 ist der erfindungsgemäße Gleichstrommotor gezeigt, der in Stufe 1 über die erste Bürste 1 und die zu dieser um 180°/p versetzt angeordnete zweite Bürste 2 betrieben wird. Die erste Bürste 1 und die zweite Bürste 2 sind jeweils in einem Spalt 5 zwischen zwei Magnetpolen 6 angeordnet, sie können jedoch abhängig von der Anordnung des Kommutators und dessen Verschaltung mit den Ankerwicklungen auch an anderen Positionen angeordnet sein, solange sie um 180°/p versetzt zueinander angeordnet sind. In der zweiten Stufe wird der erfindungsgemäße Gleichstrommotor nicht über eine um den Winkel β' zur ersten Bürste 1 versetzt angeordnete dritte Bürste 3' und die zweite Bürste 2 betrieben, wie nach dem Stand der Technik, sondern über eine um den Winkel β < β' zur ersten Bürste 1 versetzt angeordnete dritte Bürste 3 und eine zu dieser um 180°/p versetzt angeordnete vierte Bürste 4. Die dritte Bürste 3 und die vierte Bürste 4 liegen in dem gezeigten Ausführungsbeispiel in Bezug auf die erste Bürste 1 und die zweite Bürste 2 jeweils näher an einem Magnetpol 6 oder in dessen Bereich, also nicht mehr zentral oder gar nicht mehr in dem. Spalt 5 zwischen zwei Magnetpolen 6. In der ersten Stufe, in der die erste Bürste 1 und die zweite Bürste 2 an Spannung anliegen, schleifen somit die dritte Bürste 3 und die vierte Bürste 4 mit und in der zweiten Stufe, in der die dritte Bürste 3 und die vierte Bürste 4 an Spannung anliegen, schleifen die erste Bürste 1 und die zweite Bürste 2 mit. Somit ist gewährleistet, dass sowohl in der ersten Stufe durch das Mitschleifen gleichmäßig verteilter Bürsten als auch in der zweiten Stufe durch einen gleichmäßig verteilten Ankerstrombelag keine Unsymmetrien entstehen.

In der Figur 1 ist eine nach dem Stand der Technik angeordnete dritte Bürste 3', die um einen Winkel β' zur ersten Bürste 1 versetzt angeordnet ist, zur Verdeutlichung der reduzierten Verdrehung aus der neutralen Zone, die die erfindungsgemäß angeordnete dritte Bürste 3 aufweist, durchgestrichen dargestellt.

Figur 2 zeigt die berechnete Betriebskennlinie des erfindungsgemäßen Gleichstrommotors, wobei Figur 2a den Betrieb in der ersten Stufe zeigt, also mit der ersten Bürste 1 als Pluspol und der zweiten Bürste 2 als Minuspol, und die Figur 2b den Betrieb in der zweiten Stufe, d.h. mit der dritten Bürste 3 als Pluspol und der vierten Bürste 4 als Minuspol. In der ersten Stufe wird der Gleichstrommotor also über den Pluspol in einer Bürstenposition 0° (mechanisch) und den Minuspol in einer Bürstenposition 180°/p (mechanisch) betrieben. In der zweiten Stufe wird der erfindungsgemäße Gleichstrommotor in einer Bürstenposition des Pluspols beispielhaft von 49°/p (mechanisch), d.h. der dritten Bürste, und des Minuspols von 229°/p (mechanisch), d.h. der vierten Bürste, betrieben. Diese Verschiebungen beziehen sich auf die Bürstenposition 0° (mechanisch) der ersten Bürste 1.

Die in den Figuren 2 und 4 gezeigten Betriebskennlinien der Elektromotoren beziehen sich auf eine Betriebsspannung von 14 V und eine Umgebungstemperatur von 20° C. Es ist deutlich zu erkennen, dass die Betriebskennlinien in der ersten Stufe und der zweiten Stufe nach dem Stand der Technik (Figuren 4a und 4b) in etwa gleich zu denen eines Gleichstrommotors mit erfindungsgemäßer Bürstenanordnung sind (Figuren 2a und 2b), wobei der erfindungsgemäße Gleichstrommotor jedoch geräuschoptimiert ist.

## Patentansprüche

1. Gleichstrommotor, mit einem permanentmagnetische Magnetpole (6) aufweisendem Stator mit einer Polpaarzahl=p, mit einer ersten Bürste (1), einer dazu um 180°/p, versetzten zweiten Bürste (2), über die der Elektromotor in einer ersten Drehzahlstufe betrieben wird, und einer dritten Bürste (3), über die der Elektromotor in einer zweiten Drehzahlstufe betrieben wird, wobei die dritte Bürste (3) in einem Winkel kleiner 180°/p zur ersten Bürste (1) versetzt angeordnet ist, **gekennzeichnet durch** eine vierte Bürste (4), die um 180°/p versetzt zur dritten Bürste vorgesehen ist und über die der Elektromotor in der zweiten Drehzahlstufe zusammen mit der dritten Bürste (3) betrieben wird.

2. Gleichstrommotor nach Anspruch 1, **dadurch gekennzeichnet, dass** die dritte Bürste (3) und die dazu spielgelsymmetrische vierte Bürste (4) im Vergleich zu einer Anordnung mit drei Bürsten, bei der eine dritte Bürste (3') in einem Winkel versetzt zur ersten Bürste (1) angeordnet ist und bei der der Elektromotor in der zweiten Drehzahlstufe über die dritte Bürste (3') und die zweite Bürste (2) betrieben wird, so gegenüber der ersten Bürste (1) um einen Winkel versetzt angeordnet sind, dass die dritte und die vierte Bürste eine reduzierte Verdrehung aus der neutralen Zone aufweise.

3. Gleichstrommotor nach Anspruch 1 oder 2, **dadurch gekennzeichnet, dass** p≥1.

## Claims

1. DC motor, having a stator which has permanent-magnet magnetic poles (6) and a number of pole pairs - p, having a first brush (1), a second brush (2) which is offset by 180°/p in relation to the said first brush and by means of which the electric motor is operated in a first rotation speed stage, and a third brush (3) by means of which the electric motor is operated in a second rotation speed stage, wherein the third brush (3) is arranged in a manner offset at an angle of less than 180°/p in relation to the first brush (1), **characterized by** a fourth brush (4) which is intended to be offset by 180°/p in relation to the third brush and by means of which the electric motor is operated in the second rotation speed stage together with the third brush (3).

2. DC motor according to Claim 1, **characterized in that**, in comparison to an arrangement with three brushes, in which arrangement a third brush (3') is arranged offset at an angle in relation to the first brush (1) and in which arrangement the electric motor is operated in the second rotation speed stage by means of the third brush (3') and the second brush (2), the third brush (3) and the fourth brush (4), which exhibits mirror-image symmetry in relation to the said third brush, are arranged offset from the first brush (1) by an angle such that the third and the fourth brush exhibit reduced rotation from the neutral zone.

3. DC motor according to Claim 1 or 2, **characterized in that** p ≥ 1.

## Revendications

1. Moteur à courant continu, comprenant un stator présentant des pôles magnétiques à aimantation permanente (6), avec un nombre de paires de pôles p, comprenant un premier balai (1), un deuxième balai (2) décalé du premier de 180°/p, par le biais desquels le moteur électrique est entraîné à un premier niveau de régime, et un troisième balai (3), par le biais duquel le moteur électrique est entraîné à un deuxième niveau de régime, le troisième balai (3) étant disposé suivant un angle inférieur à 180°/p par rapport au premier balai (1), **caractérisé par** un quatrième balai (4), qui est prévu de manière décalée de 180°/p par rapport au troisième balai, et par le biais duquel le moteur électrique est entraîné au deuxième niveau de régime conjointement avec le troisième balai (3).

2. Moteur à courant continu selon la revendication 1, **caractérisé en ce que** le troisième balai (3) et le quatrième balai (4) symétrique par rapport à lui, par comparaison avec un agencement avec trois balais, dans lequel un troisième balai (3') est disposé de manière décalée d'un certain angle par rapport au premier balai (1) et dans lequel le moteur électrique est entraîné au deuxième niveau de régime par le biais du troisième balai (3') et du deuxième balai (2), sont disposés par rapport au premier balai (1) de manière décalée suivant un certain angle, de telle sorte que le troisième et le quatrième balai présentent une rotation réduite hors de la zone neutre.

3. Moteur à courant continu selon la revendication 1 ou 2, **caractérisé en ce que** p ≥ 1.
